# EUROPEAN PATENT APPLICATION

(11) **EP 4 328 389 A1**
(43) Date of publication of application: **28.02.2024**
(21) Application number: 22827937.8
(22) Date of filing: 03.03.2022
(51) Int. Cl.: E02F 9/20, E02F 9/24, E02F 9/26, H04N 7/18

(54) **MONITORING SYSTEM**

(30) Priority: 25.06.2021 JP 2021105726
(71) Applicant: KOBELCO CONSTRUCTION MACHINERY CO., LTD., Hiroshima-shi Hiroshima 731-5161 (JP)
(72) Inventor: KYU, Shingun, Hiroshima-shi, Hiroshima 731-5161 (JP); FUJIWARA, Sho, Hiroshima-shi, Hiroshima 731-5161 (JP); HOSO, Yukihiro, Hiroshima-shi, Hiroshima 731-5161 (JP); MUNEMASA, Yoshiki, Hiroshima-shi, Hiroshima 731-5161 (JP)
(74) Representative: TBK
(86) International application number: PCT/JP2022/009170
(87) International publication number: WO 2022/270016

(57) **Abstract**

A range where an object to be monitored is monitored is set appropriately. A monitoring system (1) includes a work machine (10) capable of being automatically operated, a work plan setting unit (31), a monitoring range setting unit (41), an object-to-be-monitored detection unit (43), and an entry determination unit (45). The work plan setting unit (31) sets a work plan of the work machine (10). The monitoring range setting unit (41) sets a first monitoring range (A1) around the work machine (10) based on the work plan. The object-to-be-monitored detection unit (43) detects the object to be monitored (O) around the work machine (10). The entry determination unit (45) determines whether the object to be monitored (O) has entered the first monitoring range (A1).

## Description

### Technical Field

The present invention relates to a monitoring system that monitors a periphery of a work machine.

### Background Art

For example, Patent Literature 1 discloses a technique with which an imaging device images a work machine that is automatically operated. This literature describes monitoring the work of a work machine.

### Citation List

### Patent Literature

Patent Literature 1: JP H11-293708 A
However, with the technique disclosed in this Literature, it is impossible to detect that an object to be monitored has entered the periphery of the work machine. In addition, with such a technique, it is desirable to be able to appropriately set a range where an object to be monitored is monitored.

### Summary of Invention

An object of the present invention is to provide a monitoring system capable of appropriately setting a range where an object to be monitored is monitored.

The present invention provides a monitoring system. The monitoring system includes a work machine to be automatically operated, a work plan setting unit, a monitoring range setting unit, an object-to-be-monitored detection unit, and an entry determination unit. The work plan setting unit sets a work plan of the work machine. The monitoring range setting unit sets a first monitoring range around the work machine based on the work plan. The object-to-be-monitored detection unit detects an object to be monitored around the work machine. The entry determination unit determines whether the object to be monitored has entered the first monitoring range.

### Brief Description of Drawings

FIG. 1 is a side view of a work machine or the like of a monitoring system according to one embodiment of the present invention.
FIG. 2 is a block diagram of the monitoring system 1 illustrated in FIG. 1.
FIG. 3 is a plan view of the work machine or the like illustrated in FIG. 1, and is a diagram illustrating a work range A1a.
FIG. 4 is a plan view of the work machine or the like illustrated in FIG. 3, and is a diagram illustrating the work range A1a and an enlarged range A1b.
FIG. 5 is a plan view corresponding to FIG. 4, and is the diagram illustrating a first monitoring range A1 and a second monitoring range A2.
FIG. 6 is a diagram illustrating a display content of a display unit illustrated in FIG. 2.
FIG. 7 is a diagram corresponding to FIG. 5 and illustrating the first monitoring range A1 in a state where a target capturing range P1 and the like illustrated in FIG. 5 are changed.
FIG. 8 is a diagram corresponding to FIG. 5 and illustrating the first monitoring range A1 in a state where the work machine illustrated in FIG. 5 is in a release phase.
FIG. 9 is a diagram corresponding to FIG. 5 and illustrating the first monitoring range A1 in a state where the work machine illustrated in FIG. 5 is in a capturing phase.

### Description of Embodiments

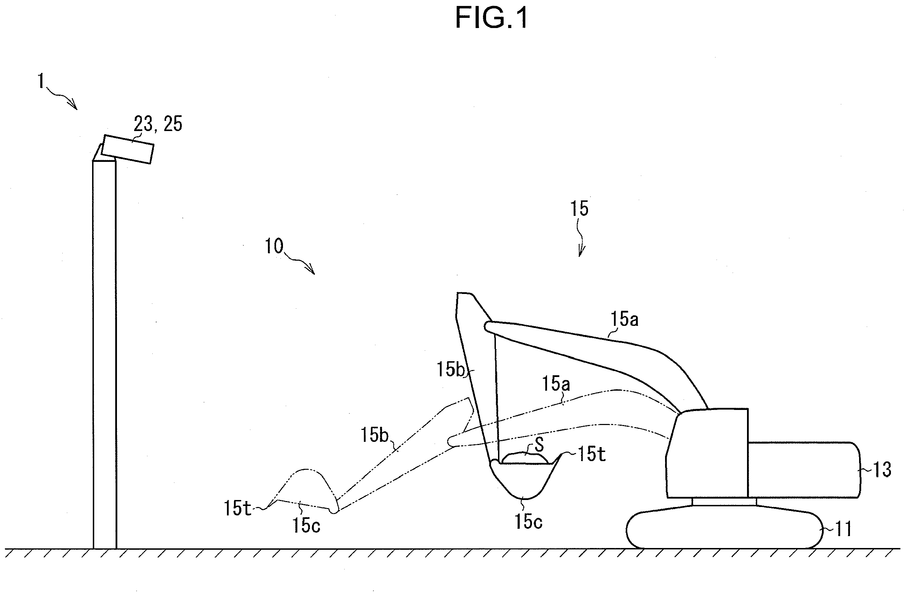

A monitoring system 1 will be described with reference to FIGS. 1 to 9.

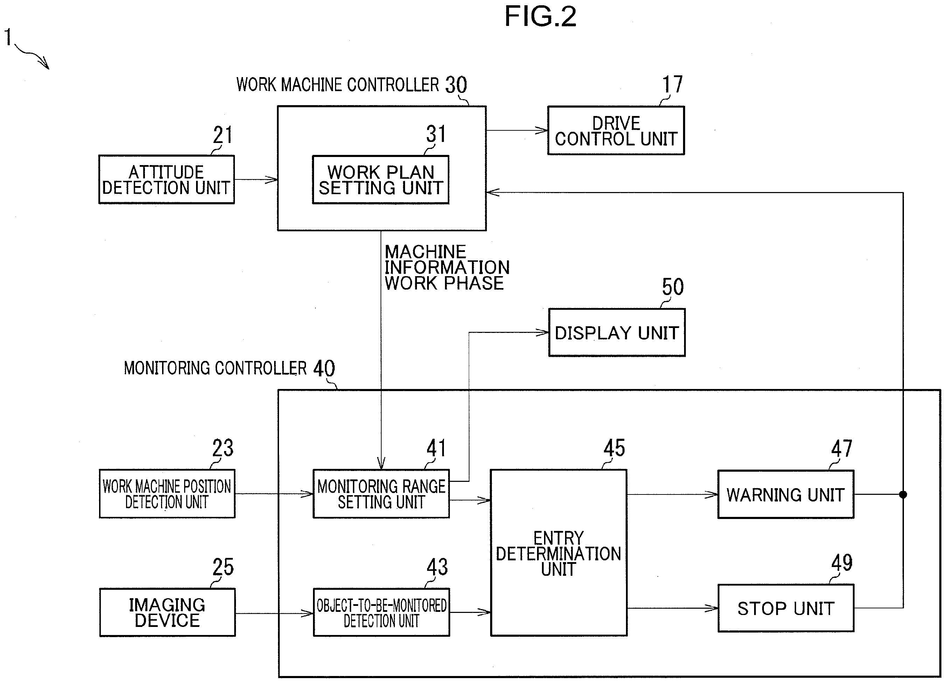

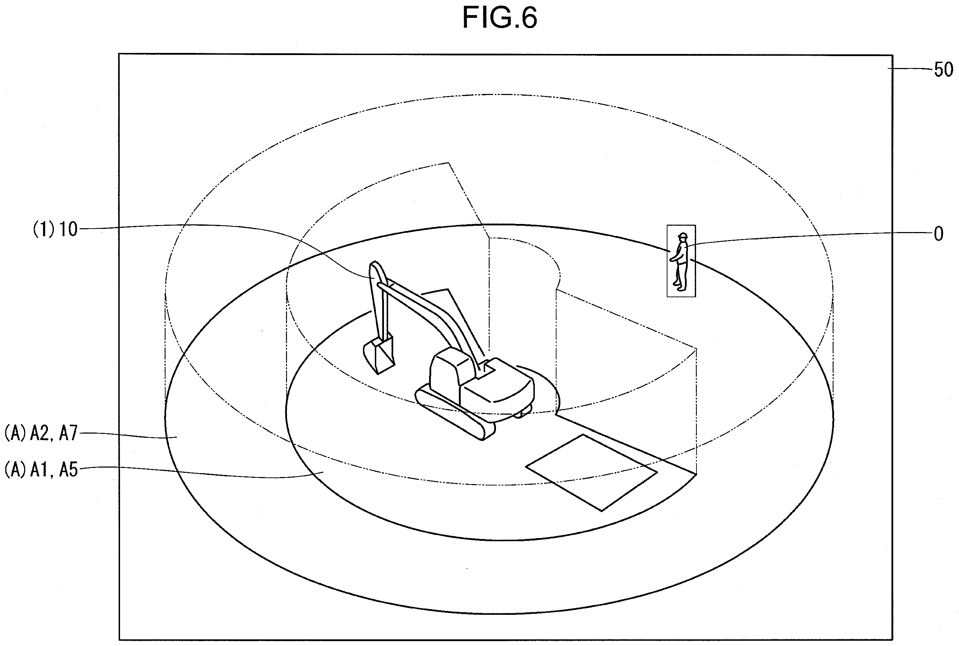

The monitoring system 1 is a system that automatically sets a monitoring range A (see FIG. 6) around a work machine 10 (work site) illustrated in FIG. 1. The monitoring system 1 includes the work machine 10, a work machine position detection unit 23, an attitude detection unit 21, an imaging device 25, a work machine controller 30, a monitoring controller 40, and a display unit 50 as illustrated in FIG. 2.

As illustrated in FIG. 1, the work machine 10 is a machine that performs work, and is, for example, a construction machine that performs construction work. The work machine 10 is an automatically-operated work machine that is automatically operated. The work machine 10 may be, for example, an excavator or a crane. Hereinafter, a case where the work machine 10 is an excavator (automatically-operated excavator) will be mainly described. The work machine 10 includes a lower travelling body 11, an upper slewing body 13, an attachment 15, and a drive control unit 17 (see FIG. 2).

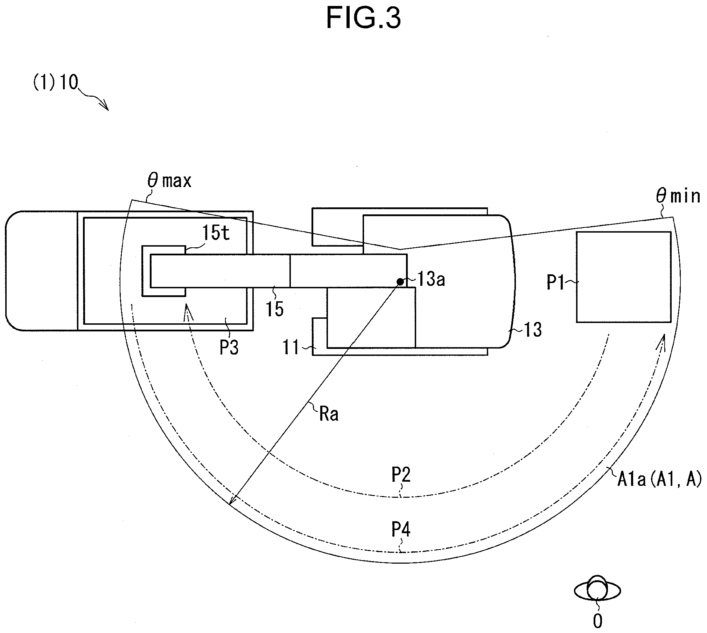

The lower travelling body 11 causes the work machine 10 to travel. The lower travelling body 11 includes, for example, a crawler. The upper slewing body 13 is mounted on the lower travelling body 11 so as to be able to slew. The upper slewing body 13 is able to slew about a slewing center 13a (see FIG. 3) with respect to the lower travelling body 11.

The attachment 15 which performs work on an object to be worked S includes, for example, a boom 15a, an arm 15b, and a distal end attachment 15c. The boom 15a is mounted on the upper slewing body 13 so as to be able to be raised and lowered (rotate in an up-down direction). The arm 15b is rotatably mounted to the boom 15a. The distal end attachment 15c is provided at a distal end of the attachment 15 and is rotatably attached to the arm 15b. The distal end attachment 15c may be a bucket that scoops, for example, earth and sand, a device (a grapple or the like) that pinches an object, or a device (a breaker or the like) that crushes or excavates an object. The object to be worked S that is worked by the attachment 15 may be earth and sand, a stone, a structure such as concrete, or waste. A specific portion of the attachment 15 (for example, a distal end portion of the distal end attachment 15c) is defined as a specific portion 15t.

The drive control unit 17 (see FIG. 2) controls an actuator that drives the work machine 10. For example, the drive control unit 17 controls a motor (not illustrated) that slews the upper slewing body 13 with respect to the lower travelling body 11. The drive control unit 17 controls a cylinder (not illustrated) that raises and lowers the boom 15a with respect to the upper slewing body 13. The drive control unit 17 controls a cylinder (not illustrated) that rotates the arm 15b with respect to the boom 15a. The drive control unit 17 controls a cylinder (not illustrated) that rotates the distal end attachment 15c with respect to the arm 15b.

The attitude detection unit 21 (see FIG. 2) detects the attitude of the work machine 10. The attitude detection unit 21 may be mounted on the work machine 10 or may be disposed outside the work machine 10 (the same applies to the work machine position detection unit 23, the imaging device 25, the work machine controller 30, the monitoring controller 40, and the display unit 50.). The attitude detection unit 21 may detect a slewing angle, a slewing angular velocity, and the like of the upper slewing body 13 with respect to the lower travelling body 11. The attitude detection unit 21 may detect a rotation angle (raising-and-lowering angle), a rotation angular velocity, and the like of the boom 15a with respect to upper slewing body 13. The attitude detection unit 21 may detect a rotation angle, a rotation angular velocity, and the like of the arm 15b with respect to boom 15a. The attitude detection unit 21 may detect a rotation angle, a rotation angular velocity, and the like of the distal end attachment 15c with respect to the arm 15b. The attitude detection unit 21 may include a sensor (for example, a rotary encoder) that detects an angle, a sensor that detects an inclination with respect to a horizontal plane, or a sensor that detects a stroke of a cylinder (not illustrated) that drives the attachment 15. The attitude detection unit 21 may detect the attitude of the work machine 10 based on a two-dimensional image or a distance image. In this case, the two-dimensional image or the distance image may be captured by the imaging device 25.

The work machine position detection unit 23 (see FIG. 2) detects the position of the work machine 10. For example, the work machine position detection unit 23 detects a position and an orientation of a reference portion of the work machine 10 with respect to a work site. The reference portion of the work machine 10 may be, for example, a specific portion of the upper slewing body 13 or the lower travelling body 11, or may be, for example, an attachment portion (boom foot) of the boom 15a to the upper slewing body 13. The work machine position detection unit 23 may perform detection with a positioning system (for example, a satellite positioning system). The positioning system may be a satellite positioning system, such as, a global navigation satellite system (GNSS). The positioning system may use a total station. The work machine position detection unit 23 may also be used as the imaging device 25.

The imaging device 25 detects three-dimensional information about an object to be imaged (for example, a position and a shape). For example, the object to be imaged by the imaging device 25 is an object to be monitored O (see FIG. 3). In a case where the imaging device 25 is also used as the work machine position detection unit 23, the object to be imaged by the imaging device 25 may include the work machine 10. The imaging device 25 acquires an image (a distance image) having distance information (depth information). The imaging device 25 may detect three-dimensional information about the object to be imaged based on the distance image and the two-dimensional image. Only one imaging device 25 may be disposed, or a plurality of the imaging devices 25 may be disposed. The imaging device 25 may be installed in the work machine 10 or may be disposed outside the work machine 10. The imaging device 25 may include a device that detects three-dimensional information with laser light, and may include, for example, a light detection and ranging (LIDAR), or, for example, a time of fight (TOF) sensor. The imaging device 25 may include a device (for example, a millimeter wave radar) that detects three-dimensional information using radio waves. The imaging device 25 may include a stereo camera. In a case where the imaging device 25 detects the three-dimensional information about an object to be imaged based on three-dimensional information and two-dimensional information, the imaging device 25 may include a camera (a monocular camera) capable of detecting a two-dimensional image.

As illustrated in FIG. 2, the work machine controller 30 is a computer that performs input and output of signals, calculation (processing), storage of information, and the like (the same applies to the monitoring controller 40). For example, the function of the work machine controller 30 is implemented by a calculation unit executing a program stored in a storage unit of the work machine controller 30 (the same applies to the monitoring controller 40). The work machine controller 30 controls the automatic operation of the work machine 10 (see FIG. 1).

The work machine controller 30 transmits information to the monitoring controller 40. For example, the work machine controller 30 may transmit the machine information about the work machine 10 (see FIG. 1) to the monitoring controller 40. The machine information about the work machine 10 may include dimensional information, shape information, and mass information about components (for example, at least one of the upper slewing body 13, the boom 15a, the arm 15b, and the distal end attachment 15c) of the work machine 10 illustrated in FIG. 1. For example, when the work machine 10 (see FIG. 1) is operated by automatic operation, the work machine controller 30 illustrated in FIG. 2 may transmit, to the monitoring controller 40, which work phase (described later) the work machine 10 operates in. For example, the work machine controller 30 may transmit information about the attitude of the work machine 10, the information being detected by the attitude detection unit 21, to the monitoring controller 40. The work machine controller 30 may transmit, to the monitoring controller 40, a position at which the specific portion 15t is disposed among target ranges (a target capturing range P1 and target release range P3) and target loci (a target lifting and slewing locus P2 and a target return and slewing locus P4) illustrated in FIG. 3. As illustrated in FIG. 2, the work machine controller 30 includes a work plan setting unit 31.

The work plan setting unit 31 sets a work plan of the work machine 10 (see FIG. 3). The work plan is information related to a work target of the work machine 10. The work plan may include information about a target locus (a target route) of travel of the work machine 10. The work plan may include information about the target range (the target capturing range P1 or the target release range P3) where the specific portion 15t illustrated in FIG. 3 performs work. The work plan may include information about the target locus (the target lifting and slewing locus P2 and the target return and slewing locus P4) of the specific portion 15t. The work plan may include information about the slewing angle of the upper slewing body 13, information about the radius from the slewing center 13a to the specific portion 15t, or information about the height from the bottom surface of the work machine 10 to the specific portion 15t.

The work plan setting unit 31 (see FIG. 2) sets a plurality of work phases (work contents) included in the work plan. Specifically, for example, the work phases include a capturing phase, a lifting and slewing phase, a release phase, and a return and slewing phase. The capturing phase is a phase in which the distal end attachment 15c captures the object to be worked S in the target capturing range P1 (for example, excavates and lifts earth and sand). For example, the target capturing range P1 is set to a place (for example, a soil and sand mountain) where the object to be worked S is collected. The lifting and slewing phase is a phase in which the distal end attachment 15c (more specifically, the specific portion 15t) moves along the target lifting and slewing locus P2 from the target capturing range P1 toward the target release range P3 with the object to be worked S being captured. The release phase is a phase in which the distal end attachment 15c releases the object to be worked S (for example, discharges earth) in the target release range P3. The target release range P3 is set, for example, on a pallet of a transport vehicle. The return and slewing phase is a phase in which the distal end attachment 15c (more specifically, the specific portion 15t) moves along the target return and slewing locus P4 from the target release range P3 toward the target capturing range P1. For example, a series of the work phases including the capturing phase, the lifting and slewing phase, the release phase, and the return and slewing phase is repeated.

The work plan may be set in the work plan setting unit 31 (see FIG. 2) by teaching, or may be set in the work plan setting unit 31 with a method other than teaching (for example, input of a numerical value). The teaching is performed as follows. A worker (operator) gets aboard the work machine 10 to operate the work machine 10, or the worker remotely operates the work machine 10. The worker operates the work machine 10 to dispose the specific portion 15t at a specific position (for example, a specific position serving as a corner of the target capturing range P1) of a range desired to be set as the target range (the target capturing range P1 or the target release range P3). Then, the work plan setting unit 31 (see FIG. 2) sets the target range based on the position where the specific portion 15t is disposed. In addition, for example, the worker operates the work machine 10 to move the specific portion 15t along a locus desired to be set as the target locus (the target lifting and slewing locus P2 or the target return and slewing locus P4). Then, the work plan setting unit 31 (see FIG. 2) sets and stores the locus along which the specific portion 15t has moved as the target locus.

The monitoring controller 40 (see FIG. 2) sets the monitoring range A. The monitoring controller 40 determines whether the object to be monitored O has entered the monitoring range A. Note that the monitoring controller 40 and the work machine controller 30 illustrated in FIG. 2 may be provided as one controller or may be provided separately. The monitoring controller 40 includes a monitoring range setting unit 41, an object-to-be-monitored detection unit 43, an entry determination unit 45, a warning unit 47, and a stop unit 49.

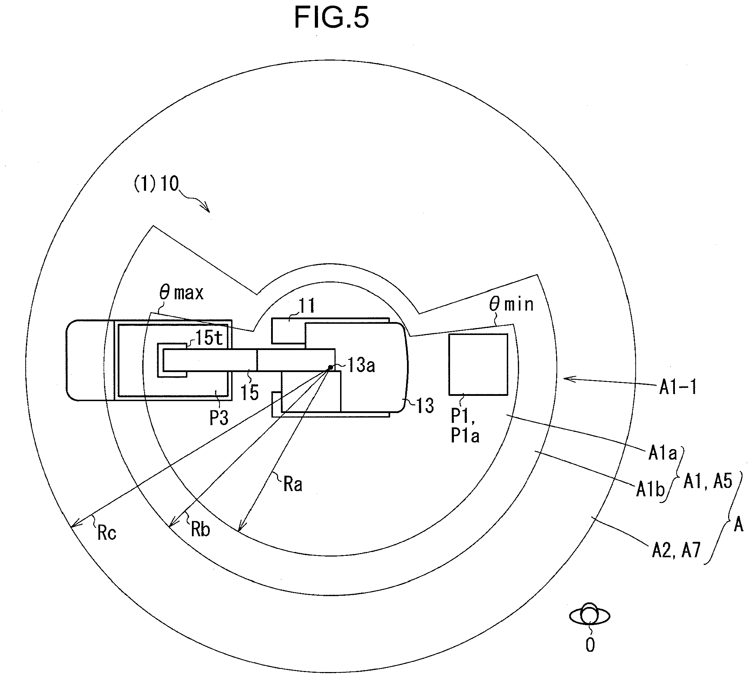

The monitoring range setting unit 41 sets the monitoring range A (see FIG. 3). The monitoring range setting unit 41 automatically sets (calculates) the monitoring range A. As illustrated in FIG. 3, the monitoring range A is a range where the monitoring system 1 performs monitoring. The monitoring range A is set at a position where the work machine 10 exists and around the work machine 10. The monitoring range A can be set variously. The monitoring range A may be set in only one stage (for example, a first monitoring range A1) as illustrated in FIG. 3, or may be set in a plurality of stages (for example, the first monitoring range A1 and a second monitoring range A2) as illustrated in FIG. 5.

The monitoring range setting unit 41 (see FIG. 2) sets the monitoring range A based on a predetermined condition. For example, the monitoring range setting unit 41 may set the monitoring range A based on the position of the work machine 10 detected by the work machine position detection unit 23 (see FIG. 2). For example, in a case where the position of the work machine 10 at the work site is fixed, the monitoring range setting unit 41 may set the monitoring range A without being based on the position of the work machine 10. The monitoring range A includes the first monitoring range A1 and the second monitoring range A2. The monitoring range A includes a stop range A5 and a warning range A7.

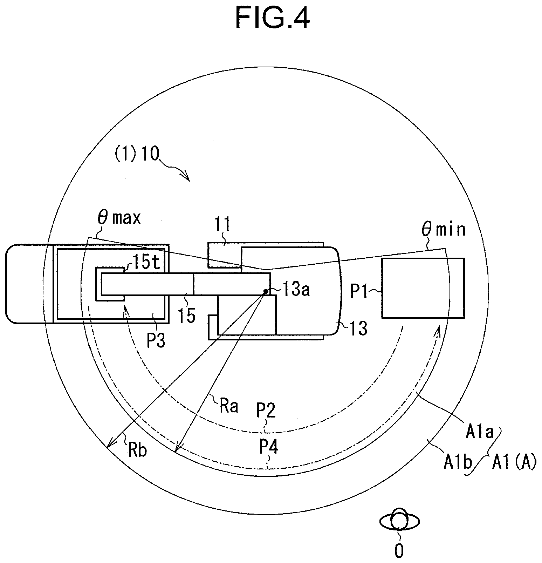

The first monitoring range A1 is set based on the work plan. As illustrated in FIG. 3, the first monitoring range A1 is set based on a work range A1a. The first monitoring range A1 may be equal to the work range A1a. As illustrated in FIG. 4, the first monitoring range A1 may be a range obtained by combining the work range A1a and an enlarged range A1b. The first monitoring range A1 may be set in only one stage or in a plurality of stages.

As illustrated in FIG. 3, the work range A1a is a range where the work machine 10 is assumed to be disposed in a case where the work machine 10 performs work based on the work plan. More specifically, the work range A1a is a range where at least a part of the work machine 10 is assumed to be disposed (for example, passes through while moving or stops and is disposed ) in the case where the work machine 10 performs work based on the work plan. The "at least a part of the work machine 10" may include the attachment 15, the upper slewing body 13, or the entire work machine 10.

The work range A1a may be set based on a work radius in the case where the work machine 10 performs work based on the work plan. The work radius is a distance from a portion of the work machine 10 farthest from the slewing center 13a to the slewing center 13a. In this case, when viewed from above, at least a part of the boundary between the inside and the outside of the work range A1a is set to an arc or a substantially arc shape centered around the slewing center 13a and having a radius of a work range radius Ra. The work range radius Ra may change with a change in the slewing angle of the upper slewing body 13. Note that the portion of the work machine 10 farthest from the slewing center 13a varies depending on the attitude of the attachment 15. The "farthest portion" may be, for example, the distal end portion of the distal end attachment 15c like the attachment 15 indicated by a chain double-dashed line in FIG. 1. In a certain case, the "farthest portion" may be, for example, a vicinity of a proximal end portion of the arm 15b (a connecting portion between the arm 15b and the boom 15a) like the attachment 15 indicated by a solid line in FIG. 1. For example, in a case where the work plan is set by teaching, the work range radius Ra illustrated in FIG. 3 may be set based on a maximum work radius (for example, a maximum elongation length of the attachment 15) at the time of teaching.

The work range A1a may be set based on the slewing angle range (see a slewing angle rang between θmax and θmin illustrated in FIG. 3) in the case where the work machine 10 performs work based on the work plan. The work range A1a may be set based on a range height of the attachment 15 (for example, a height range from the bottom surface of the lower travelling body 11 to the upper end of the attachment 15) in the case where the work machine 10 performs work based on the work plan.

As illustrated in FIG. 4, the enlarged range A1b (relief range) is set continuously from the work range A1a on an outside of the work range A1a. The reason why the enlarged range A1b is set is as follows. The work range A1a is a range where the work machine 10 is assumed to be disposed in a case where the work machine 10 is accurately operated based on the work plan. However, in practice, the position of the work machine 10 may deviate from the work plan. This deviation is caused by, for example, the influence of the inclination of the ground where the work machine 10 is disposed, the influence of an inertial force of the attachment 15 or the upper slewing body 13 (the influences of a mass and a speed), and the like. Therefore, the monitoring range setting unit 41 (see FIG. 2) sets a range (a range wider than the work range A1a) obtained by adding the enlarged range A1b to the work range A1a as the first monitoring range A1.

The enlarged range A1b is set as follows, for example. When viewed from above, at least a part of the boundary between the inside and the outside of the enlarged range A1b is set to an arc (or a substantially arc) shape centered around the slewing center 13a and having a radius of an enlarged range radius Rb. At this time, the enlarged range radius Rb may be set to be greater than the work range radius Ra.

The slewing angle range in the enlarged range A1b may be set to be wider than the slewing angle range in the work range A1a (see the slewing angle range between θmax and θmin illustrated in FIG. 4). For example, in a case where the slewing angle range is limited in the work range A1a, the slewing angle range may not be limited in the enlarged range A1b. The height range in the enlarged range A1b may be wider than the height range in the work range A1a (not illustrated).

The size of the enlarged range A1b can be set variously. For example, a value indicating the size of the enlarged range A1b may be greater than the value indicating the size of the work range A1a by a certain distance. For example, the enlarged range radius Rb may be greater than the work range radius Ra by a certain distance. As illustrated in FIG. 5, the slewing angle range in the enlarged range A1b may be wider by a certain angle than the slewing angle range in the work range A1a. The height range in the enlarged range A1b may be greater than the height range in the work range A1a by a certain distance (not illustrated).

The size of the enlarged range A1b may be calculated in accordance with any condition. For example, the size of the enlarged range A1b may be calculated based on at least one of the operation speed of at least a part of the work machine 10 and the mass of at least a part of the work machine 10. The size of the enlarged range A1b may be calculated based on the mass of the object to be worked S (see FIG. 1) captured by the work machine 10 (the distal end attachment 15c (see FIG. 1)). The size of the enlarged range A1b may be calculated based on an inertia moment of at least a part of the work machine 10, may be calculated based on an inertia moment of the object to be worked S captured by the work machine 10, or may be calculated based on both of them. The "at least a part of the work machine 10" may include the attachment 15, the upper slewing body 13, or the entire work machine 10.

In a case where the size of the enlarged range A1b is calculated based on the operation speed of at least a part of the work machine 10, the operation speed may be predicted or detected. For example, this operation speed may be predicted (calculated) from the work plan and the machine information. The operation speed may be a speed detected by the attitude detection unit 21 (see FIG. 2). For example, the "the operation speed of at least a part of the work machine 10" may include a moving speed of the attachment 15, a slewing speed of the upper slewing body 13, or a travel speed of the work machine 10. As an example, it is desirable to set the enlarged range A1b wider as the operation speed is higher.

In a case where the size of the enlarged range A1b is calculated based on the mass of at least a part of the work machine 10, the mass may be included in the machine information set by the work machine controller 30 (see FIG. 2). For example, "the mass of at least a part of the work machine 10" may be a mass of the attachment 15, a sum of the masses of the upper slewing body 13 and the attachment 15, or a mass of the entire work machine 10. As an example, it is desirable to set the enlarged range A1b wider as the mass is greater.

In a case where the size of the enlarged range A1b is calculated based on the mass of the object to be worked S (see FIG. 1) captured by the work machine 10, the mass may be predicted or detected. For example, the mass of the object to be worked S may be predicted based on at least one of the size of the distal end attachment 15c illustrated in FIG. 1 and the type (earth, gravel, etc.) of the object to be worked S. The mass of the object to be worked S may be calculated based on at least one of three-dimensional information (size, shape, etc.) of the object to be worked S imaged by the imaging device 25 and the type of the object to be worked S. The mass of the object to be worked S may be detected from a force (for example, hydraulic pressure) acting on a cylinder that drives the distal end attachment 15c.

In the example illustrated in FIG. 4, the first monitoring range A1 is a range obtained by adding the enlarged range A1b to the work range A1a (the same applies to the example illustrated in FIG. 5). In this example, the work range A1a includes a range where the attachment 15 is assumed to be disposed when the work machine 10 operates based on the work plan, and does not include a range where the upper slewing body 13 is assumed to be disposed. In this example, the enlarged range radius Rb is greater than the work range radius Ra (the same applied to the example illustrated in FIG. 5). In this example, the slewing angle range in the enlarged range A1b is wider than the slewing angle range in the work range A1a. More specifically, the slewing angle of the work range A1a is limited to a certain range (see the slewing angle range between θmax and θmin), but the slewing angle of the enlarged range A1b is not limited. In this example, the first monitoring range A1 has a columnar shape or a substantially columnar shape.

In the example illustrated in FIG. 5, the work range A1a includes a range where the attachment 15 is assumed to be disposed and a range where the upper slewing body 13 is assumed to be disposed when the work machine 10 operates based on the work plan. In this example, the slewing angle range in the enlarged range A1b is limited, and is wider than the slewing angle range in the work range A1a.

That is, in FIG. 5, the work range A1a has a shape in which a first fan shape is superimposed on a circle having a radius corresponding to the maximum dimension of the upper slewing body 13 centered around the slewing center 13a. On the other hand, the enlarged range A1b has a shape in which a second fan shape is superimposed on a circle concentric with the circular portion of the work range A1a and having a larger radius than the circle. The second fan shape has a larger radius than the first fan shape and has a wider slewing angle range on both sides in the slewing direction than the slewing angle range of the first fan shape. As a result, the enlarged range A1b is set to include the work range A1a. As an example, in FIG. 5, the work range A1a includes a part of the pallet of the transport vehicle in the target release range P3, and the enlarged range A1b includes all of the pallet of the transport vehicle in the target release range P3.

The second monitoring range A2 is set without the work plan. The monitoring range setting unit 41 (see FIG. 2) sets at least the first monitoring range A1. The monitoring range setting unit 41 does not have to set the second monitoring range A2. The monitoring range setting unit 41 for setting the first monitoring range A1 and the monitoring range setting unit 41 for setting the second monitoring range A2 may be separately provided. The second monitoring range A2 may be set in only one stage or in a plurality of stages. The second monitoring range A2 can be set variously.

The second monitoring range A2 is set based on a range where the work machine 10 can operate without traveling. For example, the second monitoring range A2 may be set based on the maximum value (maximum work radius, full reach) of a possible work radius of the work machine 10 can take. The information about the maximum work radius may be set in advance by the work machine controller 30 (see FIG. 2), for example, or may be calculated based on the information set by the work machine controller 30. For example, when viewed from above, at least a part of the boundary between the inside and the outside of the second monitoring range A2 is set to an arc (or a substantially arc) shape centered around the slewing center 13a and having a radius of a second monitoring range radius Rc. The second monitoring range radius Rc may be a maximum work radius or a value greater than the maximum work radius. In a case where the second monitoring range radius Rc is greater than the maximum work radius, a value obtained by subtracting the maximum work radius from the second monitoring range radius Rc may be a fixed value or may not be a fixed value. For example, the value obtained by subtracting the maximum work radius from the second monitoring range radius Rc may be calculated based on the operation speed and the mass of at least a part of the work machine 10 (the same applies to the enlarged range A1b).

The height of the second monitoring range A2 may be set based on the maximum value of a possible height of the work machine 10. For example, the height of the second monitoring range A2 may be the maximum value of the possible height of the work machine 10 or may be higher than the maximum value of the possible height of the work machine 10 (the same applies to the second monitoring range radius Rc).

The stop range A5 is a range for stopping the work machine 10 when the object to be monitored O enters the stop range A5 (see also the description of the stop unit 49 as for the stop). For example, the stop range A5 is the first monitoring range A1 (that is, a range set based on the work plan). The stop range A5 may be the second monitoring range A2.

The warning range A7 is a range for outputting a warning when the object to be monitored O enters the warning range A7 (as for the warning, see also the description of the warning unit 47). The warning range A7 is wider than the stop range A5. The warning range A7 may be the first monitoring range A1 (not illustrated) wider than the stop range A5 or the second monitoring range A2 wider than the stop range A5. The warning range A7 may be set in a plurality of stages.

The object-to-be-monitored detection unit 43 (see FIG. 2) detects the object to be monitored O around the work machine 10. The object to be monitored O is an object existing in the work site, and is, for example, a movable object existing in the work site. The object to be monitored O may be a person (worker) or a machine (a construction machine, a vehicle, etc.) different from the work machine 10. For example, an object (for example, a transport vehicle) that is an object from which the work machine 10 releases the object to be worked S (see FIG. 1) may not be included in the object to be monitored O. For example, the imaging device 25 illustrated in FIG. 2 may image the object to be monitored O (see FIG. 5), and the object-to-be-monitored detection unit 43 may recognize the object to be monitored O based on the information captured by the imaging device 25. The object-to-be-monitored detection unit 43 calculates information (three-dimensional coordinates) about the position of the object to be monitored O. Note that in a case where the coordinate system of the monitoring range A (see FIG. 5) is different from the coordinate system of the object to be monitored O, the monitoring controller 40 converts one of the coordinate systems and unifies these coordinate systems. For example, in a case where the monitoring range A is a coordinate system based on the work machine 10 and the coordinate system of the object to be monitored O is a coordinate system (on-site coordinate system) based on the work site, the monitoring controller 40 converts the coordinate system of the monitoring range A into the on-site coordinate system.

The entry determination unit 45 determines whether the object to be monitored O has entered the monitoring range A (see FIG. 5). Specifically, the entry determination unit 45 determines whether information about the position of the object to be monitored O (three-dimensional position) is included in the information about the range of the monitoring range A (three-dimensional range).

The warning unit 47 outputs a warning in a case where the entry determination unit 45 determines that the object to be monitored O (see FIG. 5) has entered the warning range A7 (see FIG. 5). The warning output from the warning unit 47 may be, for example, at least one of sound, light, display (monitor, etc.), and vibration. For example, the warning unit 47 may output a warning to the display unit 50. The warning output from the warning unit 47 may be a command for restricting the operation of the work machine 10, such as a command for decelerating the work machine 10. In a case where the warning unit 47 restricts the operation of the work machine 10, the warning unit 47 outputs the command for restricting the operation to the work machine controller 30. In a case where the warning range A7 (see FIG. 5) is set in a plurality of stages, the warning unit 47 may change the content of the warning based on the stage of the warning range A7 where the object to be monitored O (see FIG. 5) has entered. For example, as for the warning unit 47, as the position of the object to be monitored O is in the warning range A7 closer to the work machine 10, the level of the warning may be increased and the restriction of the operation of the work machine 10 may be stricter (for example, is further decelerated).

The stop unit 49 stops the operation of the work machine 10 in a case where the entry determination unit 45 determines that the object to be monitored O (see FIG. 5) has entered the stop range A5 (see FIG. 5). The stop unit 49 outputs a command for stopping the work machine 10 to the work machine controller 30.

As illustrated in FIG. 6, the display unit 50 displays the monitoring range A, the work machine 10, and the periphery of the work machine 10 in a superimposed manner. The display unit 50 may display the object to be monitored O. In the example illustrated in FIG. 6, the display unit 50 performs display such that the object to be monitored O that is being recognized by the monitoring controller 40 (see FIG. 2) is surrounded by a frame. The display unit 50 visualizes the monitoring range A and shows the monitoring range A to the worker. In a case where the monitoring range A is set in a plurality of stages, the display unit 50 may display the monitoring ranges A in all the stages, or may display only the monitoring ranges A in some of the stages. Specifically, for example, the display unit 50 may display only the stop range A5, may display only the warning range A7, or may display the stop range A5 and the warning range A7. The display unit 50 may display the monitoring range A in a planar manner (only a portion overlapping the ground in the monitoring range A). The display unit 50 may stereoscopically display the monitoring range A (indicated by a chain double-dashed line in FIG. 6).

### (Change of Monitoring Range A)

The monitoring range setting unit 41 (see FIG. 2) may move (follow or update) the monitoring range A based on the position of the work machine 10 when the work machine 10 illustrated in FIG. 5 moves.

The monitoring range setting unit 41 (see FIG. 2) may change the monitoring range A in accordance with the progress of the work by the work machine 10. Specifically, the monitoring range setting unit 41 may change the monitoring range A depending on the work time, or may change the monitoring range A depending on the time.

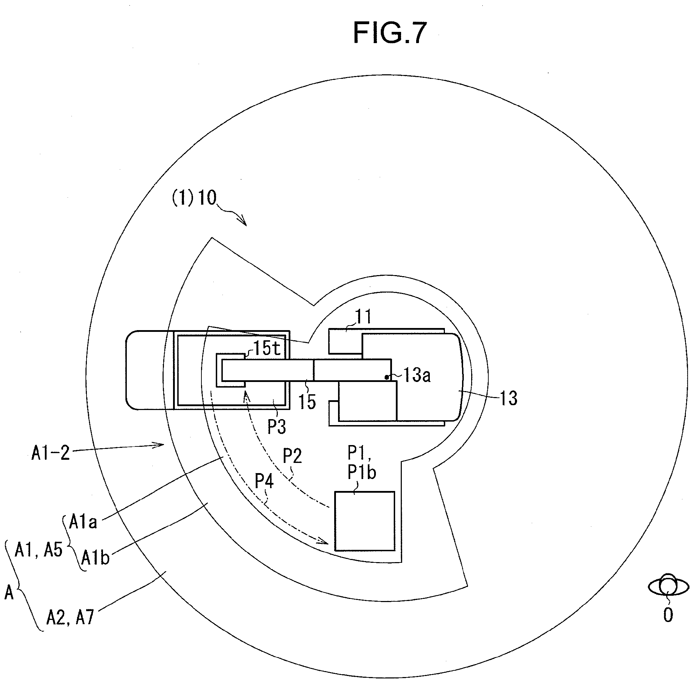

Specifically, for example, it is assumed that the work of the capturing phase in the target capturing range P1 at a certain position P1a illustrated in FIG. 5 is performed (the first monitoring range A1 at this time is set as a "first monitoring range A 1-1 before change"). Thereafter, it is assumed that the work of the capturing phase at the position P1a is completed, and the work of the capturing phase is performed at a position different from the position P1a, such as, a position P1b illustrated in FIG. 7. At this time, the work plan setting unit 31 (see FIG. 2) changes the contents of the work plan. At this time, the monitoring range setting unit 41 (see FIG. 2) changes the monitoring range A in accordance with the changed work plan (the changed first monitoring range A1 is "a changed first monitoring range A1-2"). Specifically, for example, the monitoring range setting unit 41 (see FIG. 2) sets the first monitoring range A1-1 before change until a predetermined time (for example, 1 hour or the like) elapses from the start of the work at the position P1a illustrated in FIG. 5. Then, the monitoring range setting unit 41 may set the changed first monitoring range A1-2 illustrated in FIG. 7 after the lapse of the predetermined time from the start of the work at the position P1a. In addition, for example, the monitoring range setting unit 41 may set the first monitoring range A1-1 (see FIG. 5) before change until a certain time (for example, until 12:00), and may set the changed first monitoring range A1-2 during a time (for example, 12:00 to 14:00) after the "certain time".

The monitoring range setting unit 41 (see FIG. 2) may change the monitoring range A in accordance with the work phase. More specifically, the monitoring range setting unit 41 may set the first monitoring range A1 based on the work range A1a for each work phase.

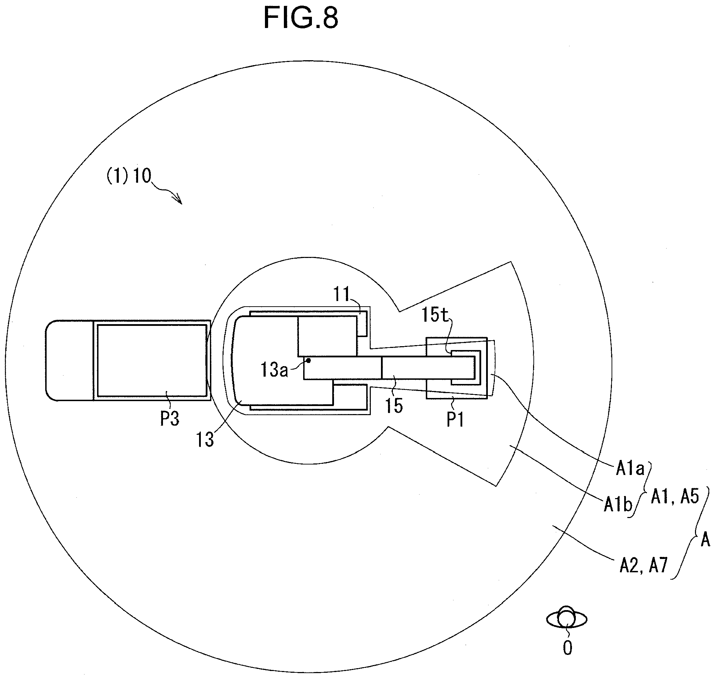

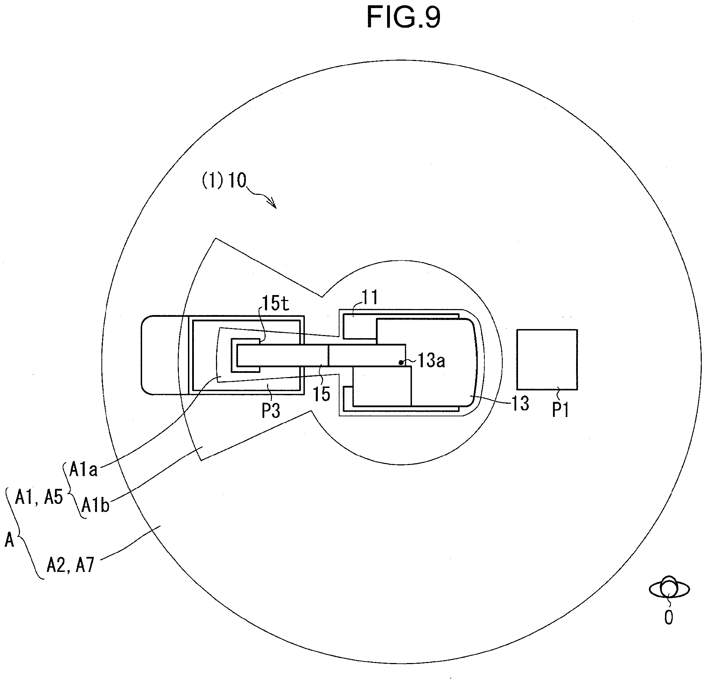

Specifically, for example, in the respective operation phases including the lifting and slewing phase and the return and slewing phase, the attachment 15 illustrated in FIG. 3 rotationally moves about the slewing center 13a between the target capturing range P1 and the target release range P3. Therefore, in each of the operation phases including the lifting and slewing phase and the return and slewing phase, the work range A1a is set to, for example, a fan shape or a substantially fan shape (see FIG. 5) when viewed from above. On the other hand, as illustrated in FIG. 8, in the capturing phase, the attachment 15 (particularly, the specific portion 15t) is disposed in the vicinity of the target capturing range P1. At this time, even if the object to be monitored O enters the vicinity of the target release range P3, no problem may occur. In this case, the target release range P3 and its periphery may not be included in the work range A1a. In addition, in the capturing phase, the target return and slewing locus P4 (see FIG. 3) of the return and slewing phase immediately before the capturing phase and the periphery thereof may not be included in the work range A1a or may be included therein. Further, in the capturing phase, the target lifting and slewing locus P2 (see FIG. 3) of the lifting and slewing phase after the capturing phase and the periphery thereof may not be included in the work range A1a or may be included therein. Similarly, as illustrated in FIG. 9, since the attachment 15 is disposed in the vicinity of the target release range P3 at the time of the release phase, the target capturing range P1 and the periphery thereof may not be included in the work range A1a. Further, in the release phase, the target lifting and slewing locus P2 (see FIG. 3) and the periphery thereof may be included in the work range A1a or may not be included therein. In the release phase, the target return and slewing locus P4 (see FIG. 3) and the periphery thereof may be included in the work range A1a or not may be included therein.

Effects of the monitoring system 1 illustrated in FIG. 2 are as follows. The monitoring system 1 includes the work machine 10 (see FIG. 1) to be automatically operated, the work plan setting unit 31, the monitoring range setting unit 41, the object-to-be-monitored detection unit 43, and the entry determination unit 45. The work plan setting unit 31 sets a work plan of the work machine 10.

The monitoring range setting unit 41 sets, as illustrated in FIG. 5, the first monitoring range A1 around the work machine 10 based on the work plan. The object-to-be-monitored detection unit 43 (see FIG. 2) detects the object to be monitored O around the work machine 10. The entry determination unit 45 (see FIG. 2) determines whether the object to be monitored O has entered the first monitoring range A1.

In the above configuration, the first monitoring range A1 is set based on the work plan of the work machine 10. Therefore, as compared with a case where the range of monitoring the object to be monitored O is set without being based on the work plan of the work machine 10, the range (the first monitoring range A1) of monitoring the object to be monitored O can be set appropriately. As a result, it is possible to prevent the first monitoring range A1 from being too wide or too narrow.

As illustrated in FIG. 2, the monitoring system 1 includes the work machine position detection unit 23 that detects the position of the work machine 10. For example, the monitoring range setting unit 41 sets the first monitoring range A1 illustrated in FIG. 5 based on the position of the work machine 10, the position being detected by the work machine position detection unit 23, and the work plan.

In the above configuration, the first monitoring range A1 is set based on the position of the work machine 10. Therefore, even in a case where the work machine 10 moves, the monitoring range setting unit 41 (see FIG. 2) can appropriately set the first monitoring range A1.

As illustrated in FIG. 1, the work machine position detection unit 23 is disposed outside the work machine 10.

The above configuration can provide the following effects. For example, in a case where the work machine position detection unit 23 is mounted on the work machine 10, it is assumed that a failure occurs in the work machine 10, and as a result, the position of the work machine 10 cannot be appropriately detected. In this case, there is a case where the first monitoring range A1 (see FIG. 5) cannot be appropriately set. On the other hand, in the above configuration, the work machine position detection unit 23 is disposed outside the work machine 10. Therefore, the position of the work machine 10 can be detected regardless of a failure of the work machine 10. As a result, the first monitoring range A1 can be appropriately set.

The monitoring range setting unit 41 (see FIG. 2) changes the first monitoring range A1 in accordance with the progress of the work by the work machine 10 illustrated in FIG. 5 (see FIGS. 5 and 7).

With the above configuration, even in a case where the work by the work machine 10 progresses and the content of the work plan changes, the first monitoring range A1 can be appropriately set.

The work plan setting unit 31 (see FIG. 2) sets a plurality of work phases included in the work plan. The monitoring range setting unit 41 (see FIG. 2) changes the first monitoring range A1 in accordance with the work phases (see FIGS. 5, 8, and 9).

With the above configuration, the first monitoring range A1 can be appropriately set in accordance with the work phases.

As illustrated in FIG. 5, the monitoring range setting unit 41 (see FIG. 2) sets the range obtained by combining the work range A1a and the enlarged range A1b as the first monitoring range A1. The work range A1a is a range where the work machine 10 is assumed to be disposed in the case where the work machine 10 performs work based on the work plan. The enlarged range A1b is a range continuous from the work range A1a on an outside of the work range A1a.

The above configuration can provide the following effects. The work range A1a is a range where the work machine 10 is assumed to be disposed in the case where the work machine 10 performs work based on the work plan. On the other hand, the actual work (operation) of the work machine 10 may be deviated from the work plan. Therefore, the monitoring range setting unit 41 (see FIG. 2) sets the range obtained by combining the work range A1a and the enlarged range A1b as the first monitoring range A1. Therefore, a wider range can be set as the first monitoring range A1 as compared with the case where only the work range A1a is set as the first monitoring range A1.

The monitoring range setting unit 41 (see FIG. 2) calculates the size of the enlarged range A1b based on at least one of the operation speed of at least a part of the work machine 10, the mass of at least a part of the work machine 10, and the mass of the object to be worked S (see FIG. 1) captured by the work machine 10.

The above configuration can provide the following effects. The level of the deviation of the actual work (operation) of the work machine 10 from the work plan varies depending on the operation speed and mass of the work machine 10, and the mass of the object to be worked S (see FIG. 1) captured by the work machine 10. With the above configuration, the first monitoring range A1 can be set more appropriately.

As illustrated in FIG. 2, the monitoring system 1 includes the warning unit 47 and the stop unit 49. The warning unit 47 outputs a warning. The stop unit 49 stops the operation of the work machine 10 (see FIG. 3). As illustrated in FIG. 5, the monitoring range setting unit 41 sets the stop range A5 which is the first monitoring range A1 and the warning range A7 wider than the stop range A5. The warning unit 47 (see FIG. 2) outputs a warning in a case where the entry determination unit 45 (see FIG. 2) determines that the object to be monitored O has entered the warning range A7. The stop unit 49 (see FIG. 2) stops the operation of the work machine 10 in a case where the entry determination unit 45 (see FIG. 2) determines that the object to be monitored O has entered the stop range A5.

In the above configuration, when the object to be monitored O approaches the stop range A5 from the outside of the stop range A5, the warning unit 47 (see FIG. 2) outputs a warning before the operation of the work machine 10 is stopped by the stop unit 49 (see FIG. 2). In response to the warning from the warning unit 47 (see FIG. 2), for example, a measure such as moving the object to be monitored O out of the monitoring range can be taken. As a result, the frequency of stopping the work machine 10 can be reduced. As a result, workability of the work by the work machine 10 can be improved. In addition, for example, by taking the measures such as moving the object to be monitored O out of the monitoring range, contact between the object to be monitored O and the work machine 10 can be reduced.

The monitoring system 1 includes the display unit 50 illustrated in FIG. 6. The display unit 50 displays the first monitoring range A1, the work machine 10, and the periphery of the work machine 10 in a superimposed manner.

With the above configuration, the relative position between the work machine 10 and the first monitoring range A1 can be visually indicated to the worker (person).

The monitoring range setting unit 41 (see FIG. 2) sets, as illustrated in FIG. 5, the second monitoring range A2 based on the range where the work machine 10 is operable without traveling. The entry determination unit 45 determines whether the object to be monitored O has entered the second monitoring range A2.

The above configuration can provide the following effects. When the work machine 10 operates without traveling, at least a part of the work machine 10 (for example, the distal end attachment 15c (see FIG. 1)) is disposed somewhere in the second monitoring range A2. Therefore, even if the object to be monitored O does not enter the first monitoring range A1 but enters the second monitoring range A2, at least a part of the work machine 10 and the object to be monitored O might approach each other. In the above configuration, the determination can be made that the object to be monitored O has entered the second monitoring range A2.

### (Modifications)

The above embodiment may be variously modified. For example, the disposition and shape of each component in the above embodiment may be changed. Specifically, for example, each component (for example, the monitoring range setting unit 41) included in the monitoring controller 40 illustrated in FIG. 2 may be disposed in the work machine controller 30, or may be disposed in a place other than the work machine controller 30 and the monitoring controller 40. For example, the connection of each component illustrated in FIG. 2 may be changed. For example, the number of the components may be changed, and some of the components need not be provided. For example, a plurality of components and parts different from each other may be described as one component and part. For example, what has been described as one component and part may be provided separately in a plurality of different components and parts.

## Claims

1. A monitoring system comprising:
a work machine capable of being automatically operated;
a work plan setting unit that sets a work plan of the work machine;
a monitoring range setting unit that sets a first monitoring range around the work machine based on the work plan;
an object-to-be-monitored detection unit that detects an object to be monitored around the work machine; and
an entry determination unit that determines whether the object to be monitored has entered the first monitoring range.

2. The monitoring system according to claim 1, further comprising
a work machine position detection unit that detects a position of the work machine,
wherein the monitoring range setting unit sets the first monitoring range based on the position of the work machine detected by the work machine position detection unit and the work plan.

3. The monitoring system according to claim 2, wherein the work machine position detection unit is disposed outside the work machine.

4. The monitoring system according to any one of claims 1 to 3, wherein
the monitoring range setting unit changes the first monitoring range in accordance with progress of work by the work machine.

5. The monitoring system according to any one of claims 1 to 4,
wherein the work plan setting unit sets a plurality of work phases included in the work plan, and
wherein the monitoring range setting unit changes the first monitoring range in accordance with the plurality of work phases.

6. The monitoring system according to any one of claims 1 to 5, wherein the monitoring range setting unit sets, as the first monitoring range, a range obtained by combining a work range that is a range where the work machine is assumed to be disposed in a case where the work machine performs work based on the work plan and an enlarged range continuous from the work range on an outside of the work range.

7. The monitoring system according to claim 6, wherein the monitoring range setting unit calculates a size of the enlarged range based on at least one of an operation speed of at least a part of the work machine, a mass of at least a part of the work machine, and a mass of an object to be worked captured by the work machine.

8. The monitoring system according to any one of claims 1 to 7, further comprising:
a warning unit that outputs a warning; and
a stop unit that stops an operation of the work machine,
wherein the monitoring range setting unit sets a stop range that is the first monitoring range and a warning range wider than the stop range,
wherein the warning unit outputs a warning in a case where the entry determination unit determines that the object to be monitored has entered the warning range, and
wherein the stop unit stops the operation of the work machine in a case where the entry determination unit determines that the object to be monitored has entered the stop range.

9. The monitoring system according to any one of claims 1 to 8, further comprising a display unit that displays the first monitoring range, the work machine, and a periphery of the work machine in a superimposed manner.

10. The monitoring system according to any one of claims 1 to 9,
wherein the monitoring range setting unit sets a second monitoring range based on a range where the work machine is operable without traveling, and
wherein the entry determination unit determines whether the object to be monitored has entered the second monitoring range.
